# FASCICULE DE BREVET EUROPEEN

(11) **EP 3 160 712 B1**
(45) Date de publication et mention de la délivrance du brevet: **18.02.2026**
(21) Numéro de dépôt: 15732714.9
(22) Date de dépôt: 30.06.2015
(51) Int. Cl.: B29B 7/74, B29C 48/52, B29C 48/64, B29C 48/535, B29C 48/685, B29C 48/655, B29B 7/42

(54) **EXTRUDEUSE COMPORTANT UN FOURREAU FILETE**
GENUTETES EXTRUDERZYLINDER
EXTRUDER COMPRISING A THREADED BARREL

(30) Priorité: 30.06.2014 FR 1456184
(43) Date de publication de la demande: 03.05.2017
(73) Titulaire: Compagnie Générale des Etablissements Michelin, 63000 Clermont-Ferrand (FR)
(72) Inventeur: LETOCART, Arnaud, F-63040 Clermont-Ferrand Cedex 9 (FR); CAPPA, Bernard, F-63040 Clermont-Ferrand Cedex 9 (FR); OUGIER, Christophe, F-63040 Clermont-Ferrand Cedex 9 (FR); LAMOINE, Philippe, F-63040 Clermont-Ferrand Cedex 9 (FR); CROSNIER, Gérard, F-63122 Ceyrat (FR); GOURDOUZE, Josian, F-30450 Senechas (FR)
(74) Mandataire: M.F.P. Michelin
(86) Numéro de dépôt international: PCT/EP2015/064901
(87) Numéro de publication internationale: WO 2016/001258

(56) Documents cités:
- CN-A- 103 770 310
- CN-U- 202 114 827
- CN-U- 203 557 672
- DE-A1- 10 130 759
- JP-A- S53 105 561
- US-A- 2 829 399
- US-A- 2 896 253
- US-A- 3 944 191
- US-A- 4 125 333

## Description

L'invention se rapporte au domaine de l'extrusion des matériaux visqueux plastiques, et plus particulièrement des matériaux viscoélastiques tels que du caoutchouc.

Traditionnellement, ces matériaux sont mis en forme à l'aide d'un moyen d'extrusion comprenant une vis filetée, mise en rotation dans un fourreau cylindrique et débouchant sur des moyens de profilage.

De manière à améliorer les caractéristiques des produits obtenus, de nombreuses adaptations ont été apportées à la conception des extrudeuses et plus particulièrement des vis d'extrudeuses. On retrouve ainsi, de manière connue, une zone d'alimentation, destinée à recevoir les matériaux dans un état solide ou peu visqueux, puis une zone de travail ou de plastification dans laquelle on élève la pression et la température du matériau afin de pouvoir en assurer le transfert en aval du dispositif, une zone d'homogénéisation dans laquelle le matériau est malaxé pour assurer une bonne régularité de ses propriétés, et une partie finale débouchant dans une filière d'extrusion ou dans un dispositif de mise en forme tel qu'un moule.

L'essentiel de l'énergie fournie au matériau provient de l'énergie mécanique transmise par la vis d'extrusion qui se transforme en énergie thermique sous l'effet du cisaillement que subit le matériau en passant entre les filets de la vis et le fourreau lisse des différentes zones de travail énoncées ci-dessus.

Dans un but d'amélioration des performances générales du dispositif, l'augmentation du débit d'extrusion peut se faire en augmentant la vitesse de rotation de la vis. Cette solution reste toutefois limitée en ce qu'elle contribue à augmenter la quantité d'énergie fournie au matériau et par voie de conséquence sa température, ce qui peut s'avérer préjudiciable à la conservation de ses propriétés.

Toujours dans cette même perspective, il est aussi possible d'augmenter le pas de la vis afin de faciliter le transfert du matériau. Mais cette solution reste limitée à l'extrusion de matériaux peu ou très peu visqueux ne nécessitant pas des pressions de transfert élevées ni l'apport d'une quantité de travail trop importante.

Aussi, la voie la plus couramment employée pour traiter des matériaux plus visqueux à grand débit, consiste à augmenter le diamètre de la vis et à redimensionner l'installation à la hausse, ce qui n'est pas sans incidences sur le coût du dispositif d'extrusion.

Par soucis d'économie, on peut également chercher à introduire les matériaux à froid, c'est-à-dire à la température ambiante de l'atelier, pour éviter le coût d'une étape préliminaire de réchauffage et de plastification. Le matériau introduit est alors fortement visqueux et nécessite l'apport d'une grande quantité d'énergie pour pouvoir être extrudé dans une filière.

Le document US 4125333 décrit une extrudeuse destinée à travailler avec de la résine fondue. Selon ce document, on accroît la performance de l'extrudeuse en pratiquant des rainures hélicoïdales à l'intérieur du fourreau. Ces rainures du fourreau tournent dans un même sens que celles de la vis et ont pour but de conférer une meilleure accroche de la résine fondue sur les parties métalliques de l'extrudeuse.

Un autre exemple d'extrudeuse pour matière plastique fondue est décrit dans le document CN 103770310 dans lequel la profondeur des rainures de la vis augmente axialement dans le sens d'écoulement du matériau, alors que celle des rainures du cylindre diminue. Ceci a pour but de permettre le travail de l'extrudeuse avec de la matière solide et liquide au fur et à mesure du déplacement du matériau à l'intérieur de l'extrudeuse afin d'obtenir rapidement de la matière plastique fondue en sortie de l'extrudeuse.

Encore un autre exemple d'extrudeuse est décrit dans le document US-2 829 399, dans lequel l'extrudeuse est destinée à permettre l'extrusion, en une seule étape, d'un plastique qui est initialement approvisionné sous forme d'une bouillie dans laquelle des particules dudit plastique se trouvent en suspension dans l'eau, et ce afin d'éviter que ledit plastique ne se présente sous une forme trop collante qui empêcherait le travail de celui-ci. L'extrudeuse comprend donc une première zone d'essorage qui est destinée à extraire l'eau de la bouillie, préalablement au travail d'extrusion proprement dit qui intervient plus en aval, après l'essorage. Dans ladite zone d'essorage le fourreau de l'extrudeuse est pourvu d'un filetage qui est notamment destiné à permettre à l'eau extraite de remonter l'extrudeuse à contre-courant vers la trémie d'alimentation qui fait office de déversoir. En revanche, le document indique que tout filetage de fourreau est inutile en aval de la zone d'essorage, et propose donc un fourreau lisse.

Aucune des extrudeuses décrites dans ces documents ne peut fonctionner avec du caoutchouc à l'état cru.

L'invention a pour objet de proposer une solution alternative permettant d'augmenter le débit de l'extrudeuse destinée à travailler avec des matériaux viscoélastiques tels que du caoutchouc, tout en maitrisant la taille du dispositif et la puissance à mettre en oeuvre.

L'extrudeuse selon l'invention comprend plusieurs zones affectées chacune à une fonction rhéologique particulière disposées axialement depuis une extrémité amont jusqu'à une extrémité aval de l'extrudeuse.

L'extrudeuse comprend une vis sans fin de diamètre donné comportant dans chacune des zones au moins un filet hélicoïdal, s'étendant radialement depuis un arbre central de la vis sur une hauteur, selon un sens et selon un pas définis pour chacune des zones, et entrainée en rotation autour d'un axe dans un fourreau. L'extrudeuse se caractérise en ce que le fourreau comporte au moins un filet hélicoïdal définissant au moins un chemin hélicoïdal par lequel une partie du flux de matériau est destiné à progresser, et parcourant chacune desdites zones en s'étendant radialement vers l'intérieur selon une hauteur du filet du fourreau qui est comprise entre 0,1 et 0,5 fois la hauteur du filet de la vis et dans laquelle le filet du fourreau forme une hélice tournant en sens inverse au sens de l'hélice formée par le filet de la vis.

La présence d'un fourreau fileté sur toute la longueur de l'extrudeuse permet d'augmenter la section de passage du matériau et d'augmenter le débit. La forme hélicoïdale du filet de la vis permet également de contribuer à son avancement.

Il a été constaté, lors des tests effectués en laboratoire, que pour une hauteur de filet du fourreau comprise entre 0,1 et 0,5 fois la hauteur du filet de la vis, on arrive à obtenir une augmentation significative du débit de l'extrudeuse et en même temps, à optimiser le travail apporté au mélange qui traverse ledit chemin hélicoïdal. En effet, il a été constaté que, pour des hauteurs du filet du fourreau supérieures à 0,5 fois la hauteur du filet de la vis, le mélange n'arrive plus à être entraîné dans le chemin hélicoïdal lors de la rotation de la vis et qu'il reste bloqué dans des zone de stagnation notamment au fond des gorges du filet du fourreau. Il a également été constaté qu'un filet du fourreau de faible hauteur, inférieure à 0,1 fois la hauteur du filet de la vis, n'a pratiquement pas d'effet sur l'augmentation du débit de l'extrudeuse ou sur le travail apporté au mélange.

Ainsi, en ajustant en plus le pas du filet ou des filets du fourreau on obtient un débit de matériau passant dans le ou les chemins hélicoïdaux délimités par le ou les filets du fourreau compris entre 10 et 50% du débit total de matériau passant dans le dispositif d'extrusion.

De préférence, la hauteur du filet du fourreau est égale à 0,3 fois la hauteur du filet de la vis et on ajuste le pas du filet du fourreau de sorte que la part de flux de matériau passant dans ledit chemin hélicoïdal du fourreau est de 30% du flux total.

Selon l'invention également, le sens de rotation de l'hélice formée par les filets du fourreau est inverse au sens de rotation de l'hélice formée par les filets de la vis. L'inversion du sens des filets du fourreau par rapport au sens des filets de la vis permet ainsi de fournir un travail mécanique supplémentaire au matériau sans qu'il soit nécessaire d'augmenter la vitesse de rotation de manière excessive.

Enfin, en adaptant, comme on le verra par la suite, le nombre, la hauteur, le pas et la forme des filets de la vis et du fourreau dans chacune des zones, on optimise le travail apporté au matériau tout en conservant les performances de débit attendues.

De préférence, la largeur du chemin hélicoïdal est supérieure à la largeur du filet hélicoïdal du fourreau.

Il a été constaté lors des tests effectués en laboratoire que, pour augmenter le débit d'une extrudeuse à vis et fourreau qui sont munis de filets sur toute leur longueur, une condition nécessaire au bon déplacement du matériau élastomère lors de sa mise en forme entre l'extrémité d'entrée dans le fourreau et celle de sortie de celui-ci, est que la largeur des gorges du chemin fileté soit plus importante que la largeur du filet hélicoïdal du fourreau. Cette condition doit être avantageusement respectée sur toute la longueur du fourreau. En effet, le cisaillement du matériau élastomère qui est mis en forme entre les filets de la vis et ceux du fourreau lorsqu'ils tournent en sens contraires est si important que la température du matériau augmente de manière forte. Ainsi, afin d'éviter une montée en température qui risquerait de dégrader le matériau, il est nécessaire d'augmenter la section de passage du matériau entre les filets.

Ceci n'est pas le cas avec les filets des fourreaux de l'état de la technique prévus pour bloquer en rotation les matières plastiques ou thermoplastiques à l'état fluide ou semi fluide. Un mélange élastomère ne peut fonctionner avec de telles extrudeuses car il risque de plus de rester bloqué dans des gorges étroites du fourreau.

De manière avantageuse, le rapport entre la largeur des gorges du chemin hélicoïdal et celle du filet hélicoïdal du fourreau est compris entre 3 et 10 et de préférence entre 5 et 10. Ces valeurs ont été optimisées pour assurer le bon niveau de cisaillement du matériau nécessaire à sa mise en forme et, en même temps, le déplacement du flux de matériau à l'intérieur de l'extrudeuse.

L'extrudeuse selon l'invention peut aussi comprendre isolément ou en combinaison les caractéristiques suivantes :
- dans chacune des zones, le pas des filets du fourreau est supérieur ou égal au pas des filets de la vis ;
- la hauteur du filet du fourreau et celle du filet de la vis sont constantes sur la longueur d'au moins une zone ;
- l'extrudeuse comprend une ou plusieurs zones assurant chacune séparément une fonction rhéologique parmi les fonctions suivantes : une zone d'alimentation, dédiée à l'introduction et la plastification du matériau, une zone de mise en pression, dédiée à la montée en température et en pression du matériau, une zone d'homogénéisation, dédiée à l'homogénéisation des propriétés rhéologiques du matériau, une zone de stabilisation, dédiée à la stabilisation du flux de matériau avant la sortie au travers d'une filière d'extrusion ;
- dans la zone d'alimentation, chaque filet de la vis comporte au moins une découpe destinée à favoriser l'accroche mécanique du matériau entrant, et disposée de sorte qu'aucune découpe ne soit dans l'alignement axial d'une découpe disposée sur les filets adjacents ;
- dans la zone d'alimentation, la vis comprend au moins quatre filets ;
- dans la zone de mise en pression, la vis comprend un filet unique ;
- dans la zone de mise en pression, la vis a un pas compris entre 0,5 et 1,5 fois le diamètre de la vis ;
- dans la zone de mise en pression, le diamètre de l'arbre de la vis est inférieur au diamètre de l'arbre de la vis dans la zone située en amont ou en aval de ladite zone de mise en pression ;
- dans la zone d'homogénéisation, la vis comprend au moins deux filets ;
- dans la zone d'homogénéisation, la vis a un pas compris entre 1 et 1,5 fois le diamètre de la vis ;
- dans la zone d'homogénéisation, les filets de la vis ou du fourreau sont interrompus de manière à former des espaces annulaires cylindriques ;
- dans la zone d'homogénéisation, l'arbre de la vis ou le fourreau comportent des doigts s'étendant radialement, et disposés de manière à circuler dans lesdits espaces annulaires cylindriques ;
- dans la zone de stabilisation, la vis et le fourreau comportent chacun deux filets.

L'invention sera mieux comprise à la lecture des figures annexées, qui sont fournies à titre d'exemples et ne présentent aucun caractère limitatif, dans lesquelles :
- la figure 1 représente une vue générale schématique en coupe d'une extrudeuse selon l'invention ;
- la figure 2 représente une vue en coupe et plus détaillée de la zone d'alimentation ;
- la figure 3 représente une vue en coupe et plus détaillée de la zone de mise en pression ;
- la figure 4 représente une vue en coupe et plus détaillée de la zone d'homogénéisation
- la figure 5 représente une vue en coupe et plus détaillée du fourreau dans la zone d'homogénéisation ;
- la figure 6 représente une vue en coupe et plus détaillée de la zone de stabilisation ;
- la figure 7a représente une vue en coupe du fourreau dans la zone d'alimentation et la figure 7b est une vue similaire à celle de la figure 2a, mais dans laquelle la vis et le mélange sont également représentés.

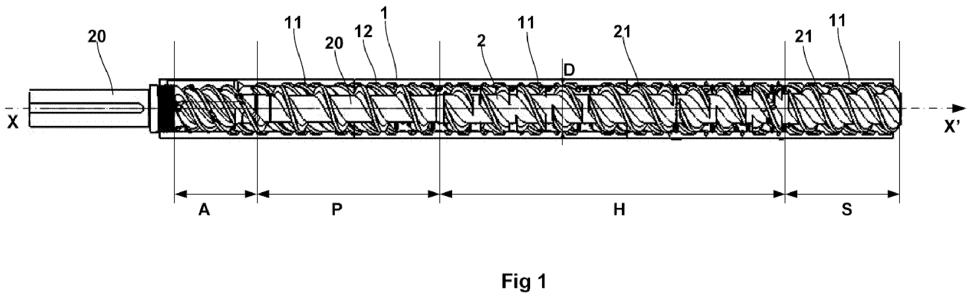

Le dispositif d'extrusion illustré à la figure 1 est destiné au travail avec un matériau élastomère (ou caoutchouc) et il est formé d'une vis cylindrique sans fin 2 entrainée en rotation par un ensemble motoréducteur (non représenté) autour d'un axe XX' dans un fourreau 1. La vis et le fourreau ont des longueurs sensiblement égales. L'extrudeuse comprend une pluralité de zones spécifiques A, P, H et S disposées successivement en aval les unes des autres le long de l'axe XX', en considérant que le matériau s'écoule de l'amont vers l'aval dans le sens de la flèche portée par l'axe XX'.

Dans chacune des zones, l'arbre 20 de la vis supporte un ou plusieurs filets hélicoïdaux 21 s'étendant radialement vers l'extérieur. Le nombre de filets, la hauteur h₁ et la forme et le pas des filets de la vis peuvent varier d'une zone à une autre comme on le verra par la suite. Les filets de la vis forment une hélice dont le sens de rotation est constant sur toute la longueur de la vis. Dans le cas de la vis illustrée à la figure 1, le sens de rotation de l'hélice est celui des aiguilles d'une montre.

Le fourreau 1 supporte un ou plusieurs filets hélicoïdaux 11 dont la hauteur h₂, la forme et le pas peuvent également varier selon la zone considérée. Ces filets s'étendent sur toute la longueur du fourreau depuis son extrémité amont jusqu'à son extrémité aval.

Dans les figures on a illustré un fourreau fileté sur toute sa longueur comportant deux filets ayant un pas constant sur toute la longueur du fourreau.

De préférence selon l'invention, le pas des filets hélicoïdaux 11 du fourreau 1 est compris entre une et quatre fois le diamètre de la vis 2.

L'espace libre de hauteur h₂ situé entre la base du ou des filets 11 portés par le fourreau 1 et délimité par lesdits filets, forme un ou plusieurs chemins hélicoïdaux dans lesquels une part du flux de matériau est amené à circuler.

Le sens de rotation de l'hélice formée par les filets du fourreau est inverse au sens de rotation de l'hélice formée par les filets de la vis. Et, dans le cas du fourreau servant de support à la présente description, les filets tournent dans le sens inverse des aiguilles d'une montre. L'inversion du sens des filets du fourreau par rapport au sens des filets de la vis permet ainsi de fournir un travail mécanique supplémentaire au matériau sans qu'il soit nécessaire d'augmenter la vitesse de rotation de manière excessive.

Le diamètre D de la vis cylindrique 2 est défini par la valeur hors tout mesurée entre les extrémités radiales des filets de la vis.

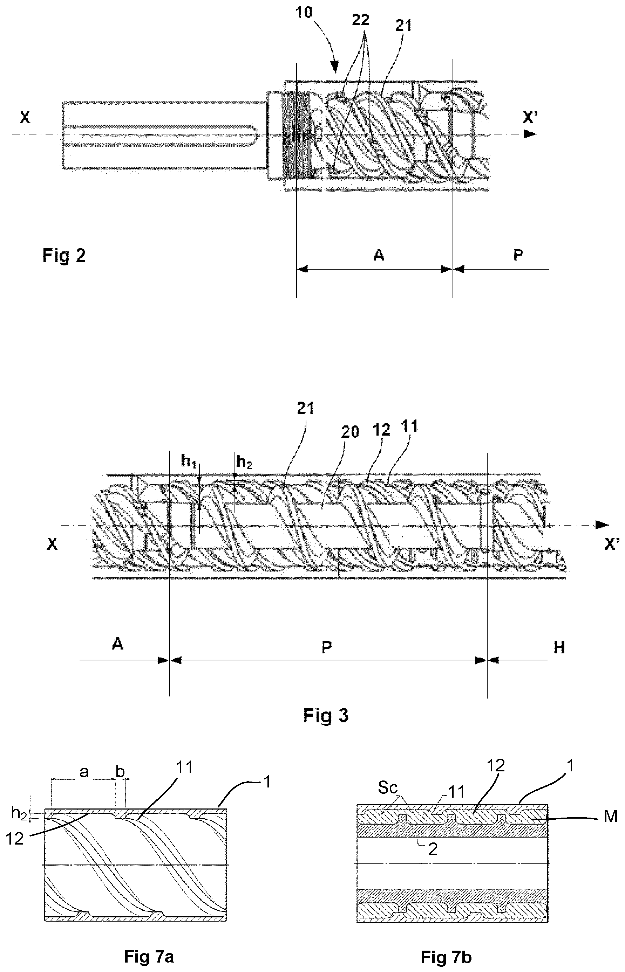

Pour que les gains en débit soient significatifs, il convient que la hauteur h₂ des filets du fourreau (voir figure 3) représente un pourcentage significatif de la hauteur h₁ des filets de la vis. Lors des tests effectués en laboratoire, il s'est avéré qu'un pourcentage de l'ordre d'au moins 10% soit un seuil minimal pour obtenir les avantages recherchés, lesquels sont liés à l'augmentation de débit, cumulée avec la possibilité de traiter des matériaux visqueux voire très visqueux en les introduisant à froid, tout en obtenant en sortie de l'extrudeuse un état rhéologique optimum en vue de la mise en forme d'un profilé au travers d'une filière.

En règle générale, on s'arrange pour que le débit de matériau passant entre le ou les filets 11 du fourreau 1 ou, dit d'une autre manière, dans le ou les chemins hélicoïdaux de hauteur h₂ délimités par le ou les filets 11 du fourreau, soit compris entre 10 et 50% du débit total de matériau passant dans le dispositif d'extrusion.

Pour atteindre cette performance, et pour favoriser l'écoulement du matériau dans les filets du fourreau, on ajustera donc le pas des filets du fourreau, de manière à ce qu'il soit, dans chacune des zones, supérieur ou égal au pas des filets de la vis.

Le nombre de filets du fourreau peut utilement être égal à deux.

La figure 2 est une vue plus détaillée de la zone d'alimentation A située en amont de l'extrudeuse dans laquelle le matériau est introduit par un orifice 10. Au niveau de la zone d'alimentation, la vis comporte un nombre important de filets dont le pas est compris entre une et deux fois le diamètre D de la vis.

De bons résultats ont été obtenus avec une vis comportant au moins quatre filets.

Les filets de la vis situés dans cette zone d'alimentation A, sont munis de découpes 22 destinées à favoriser l'accroche et à entrainer le matériau entrant. Les résultats les plus significatifs ont été obtenus lorsque chaque filet comporte au moins une découpe disposée de sorte qu'aucune découpe ne soit dans l'alignement axial d'une découpe disposée sur les filets adjacents.

La hauteur h₂ du filet du fourreau et la hauteur h₁ du filet de la vis sont constantes sur la longueur de la zone d'alimentation afin de permettre l'avancement du mélange à l'état solide entre les filets de la vis et du fourreau.

Selon une caractéristique avantageuse de l'invention, la largeur « a » des gorges ou espaces libres du chemin hélicoïdal 12 est supérieure à la largeur « b » du filet hélicoïdal 11 du fourreau 1. Cette condition est respectée sur toute la longueur du fourreau 1.

On va expliquer dans ce qui suit le comportement du matériau en relation avec la zone d'alimentation A où le mélange est très visqueux, et le passage du mélange est assimilé à celui d'un solide qui glisse sur les filets de la vis 2 et ceux du fourreau 1 et a un effet de poussée sur le mélange aval. La figure 7a illustre la géométrie du fourreau 1 selon l'invention. La figure 7b illustre le mélange M lors de sa mise en forme à l'intérieur de l'extrudeuse. Le flux de mélange passe à la fois entre les filets de la vis 2 et ceux du fourreau 1 avec une sollicitation en cisaillement au niveau des surfaces de cisaillement Sc. Lors de l'entraînement en rotation de la vis 2, le cisaillement au niveau des surfaces Sc ( surfaces qui se trouvent au niveau des sommets des filets de la vis et du fourreau) permet de mobiliser le mélange M et de le faire avancer, alors que des frottements du mélange se produisent en même temps au niveau des filets de la vis 2 et du fourreau 1, frottements qui ont tendance à le freiner. La géométrie du fourreau 1 a été conçue pour tenir compte de ces deux phénomènes à actions antagonistes sur le mélange afin de permettre au mélange d'être correctement mis en forme et, en même temps, d'augmenter le débit de l'extrudeuse.

La figure 3 représente la zone de mise en pression P, dans laquelle la pression ainsi que la température du matériau augmentent. Cette augmentation de pression va servir à compenser les pertes de charge engendrées par la circulation du matériau dans les étages disposés en aval. A cet effet il convient de réduire le pas de la vis qui se situe alors entre 0,5 et 1,5 fois le diamètre D de la vis. La montée en pression va commander le débit global de l'extrudeuse. Aussi, pour ne pas réduire le débit dans cette zone, il est proposé de réduire le diamètre de l'arbre et d'augmenter en conséquence la hauteur h₁ des filets de la vis.

Dans la zone de mise en pression P la largeur « a » des gorges du chemin hélicoïdal 12 est supérieure à la largeur « b » du filet hélicoïdal 11 du fourreau 1 également. De manière similaire à la zone d'alimentation, le déplacement du mélange élastomère est rendu possible par l'augmentation de la section de passage entre les filets de la vis et du fourreau. Le matériau parcourt la zone de mise en pression en étant fortement cisaillé, ce qui provoque une augmentation de la pression à l'intérieur de l'extrudeuse et contribue au maintien du débit de l'extrudeuse malgré les pertes de charge en aval (au niveau de la voûte ou de la filière en sortie d'extrudeuse).

Dans cette zone P la vis ne comporte, de manière préférentielle, qu'un seul filet.

La montée en température est liée tout à la fois au cisaillement du matériau entre les filets de la vis et les filets du fourreau et au glissement du matériau sur les filets de la vis ou du fourreau. Ce deuxième effet étant réduit, comme cela a été indiqué ci-dessus, dans le cas de l'extrudeuse faisant l'objet de l'invention, il est nécessaire de prévoir une zone plus particulièrement dédiée à cette fonction.

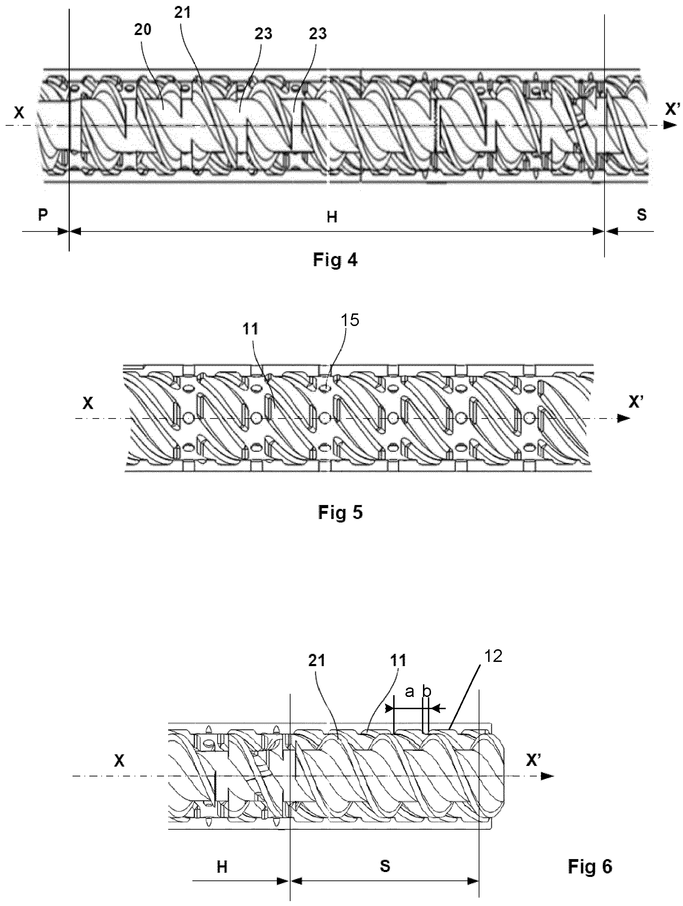

C'est dans la zone d'homogénéisation H, en référence aux figures 4 et 5, que va donc se faire la majeure partie du travail mécanique convertie sous forme thermique par le matériau. C'est à ce niveau également que les propriétés rhéologiques, telles que la température, la fluidité et l'homogénéité de la répartition de ces deux caractéristiques sont obtenues.

Dans cette zone le pas de la vis est ramené à un pas compris entre 1 et 2 fois le diamètre D de la vis. La largeur des gorges du chemin hélicoïdal est supérieure à la largeur du filet hélicoïdal du fourreau, ce qui permet, en augmentant la section de passage dans cette zone, de mobiliser le mélange et le faire avancer, tout en lui assurant un bon taux de cisaillement par frottement sur les filets de la vis et du fourreau.

Pour améliorer l'homogénéité du matériau on va favoriser le nombre de subdivisions du flux traversant cette zone en augmentant le nombre de filets de la vis et du fourreau. Pour favoriser ce brassage, une première solution consiste donc à réaliser des espaces annulaires libres 23, en interrompant les filets de la vis ou les filets du fourreau sur de courtes distances axiales de manière à rediriger les flux.

En référence aux figures 5 et 6, on peut également augmenter le travail fourni en créant des obstacles, prenant ici la forme de doigts fixes 15 portés par le fourreau, et s'étendant radialement vers l'intérieur dans lesdits espaces annulaires 23 libres créés au niveau des filets de la vis. De la même manière, il est aussi possible de faire porter les doigts par la vis et de créer lesdits espaces annulaires correspondants en interrompant axialement les filets du fourreau.

Pour que le matériau atteigne les propriétés optimales attendues, la zone d'homogénéisation H s'étend, axialement, en règle générale, sur une longueur représentant au moins un tiers de la longueur totale de l'extrudeuse.

La zone de stabilisation S située en aval du dispositif d'extrusion permet d'ajuster le débit et la pression du flux de matériau avant d'introduire ce dernier dans la filière d'extrusion (non représentée) pour donner une forme définitive au profilé destiné à être utilisé dans un dispositif de transformation ultérieur.

Dans cette zone, le pas de la vis est également compris entre une et deux fois le diamètre D de la vis.

Il a été établi que les conditions optimales de fonctionnement de l'extrudeuse sont atteintes pour une géométrie du fourreau 1 selon laquelle les valeurs du rapport a/b sont comprises entre 3 et 10, et de préférence entre 5 et 10, et pour une valeur du rapport entre la largeur « a » des gorges du chemin hélicoïdal et la hauteur h₂ du filet du fourreau 1 supérieure à 3.

L'extrudeuse selon l'invention comprend donc des zones fonctionnelles configurées selon les indications décrites ci-dessus, disposées selon l'ordre proposé, et agissant en combinaison les unes avec les autres. De nombreuses adaptations de l'invention sont donc possibles dans lesquelles on peut faire varier la longueur axiale d'une zone par rapport à une autre, ou encore le nombre, la hauteur, le pas des filets dans chacune des zones.

Dans un exemple de réalisation de l'invention, avec une extrudeuse comprenant une vis 2 de diamètre de 150mm, une hauteur du pas h₁ de 30mm et tournant dans un fourreau fileté 1 à trois filets 11 dont la hauteur du filet h₂ est égale à 10mm, le pas est égal à 450mm, on a obtenu un débit passant dans les filets du fourreau 11 égal à 30% du débit total de matériau passant dans l'extrudeuse.

## Revendications

1. Extrudeuse destinée à la mise en forme d'un flux de matériau viscoélastique tel que du caoutchouc comprenant plusieurs zones (A, P, H, S), affectées chacune à une fonction rhéologique particulière et disposées axialement depuis une extrémité amont jusqu'à une extrémité aval de l'extrudeuse, et comprenant une vis cylindrique sans fin (2) de diamètre donné (D), comportant dans chacune des zones au moins un filet hélicoïdal (21), s'étendant radialement depuis un arbre central (20) de la vis sur une hauteur (h₁), selon un sens et selon un pas définis pour chacune des zones, et entrainée en rotation autour d'un axe (XX') dans un fourreau (1), **caractérisée en ce que** le fourreau (1) comporte au moins un filet hélicoïdal (11) définissant au moins un chemin hélicoïdal (12) par lequel une partie du flux de matériau est destiné à progresser, et parcourant chacune desdites zones en s'étendant radialement vers l'intérieur selon une hauteur (h₂) du filet du fourreau qui est comprise entre 0,1 et 0,5 fois la hauteur (h₁) du filet de la vis et dans laquelle le filet du fourreau forme une hélice tournant en sens inverse au sens de l'hélice formée par le filet de la vis.

2. Extrudeuse selon la revendication 1, **caractérisée en ce que** la largeur (a) des gorges du chemin hélicoïdal (12) est supérieure à la largeur (b) du filet hélicoïdal (11) du fourreau (1).

3. Extrudeuse selon l'une des revendications 1 ou 2, **caractérisée en ce que** le rapport entre la largeur (a) des gorges du chemin hélicoïdal et celle (b) du filet hélicoïdal (11) du fourreau (1) est compris entre 3 et 10.

4. Extrudeuse selon l'une des revendications précédentes, dans laquelle, dans chacune des zones, le pas du filet du fourreau est supérieur ou égal au pas du filet de la vis.

5. Extrudeuse selon l'une des revendications précédentes, comprenant une ou plusieurs zones assurant chacune séparément une fonction rhéologique parmi les fonctions suivantes :
- une zone d'alimentation (A), dédiée à l'introduction et la plastification du matériau,
- une zone de mise en pression (P), dédiée à la montée en température et en pression du matériau,
- une zone d'homogénéisation (H), dédiée à l'homogénéisation des propriétés rhéologiques du matériau,
- une zone de stabilisation (S), dédiée à la stabilisation du flux de matériau avant la sortie au travers d'une filière d'extrusion.

6. Extrudeuse selon la revendication 5, dans laquelle, dans la zone d'alimentation (A), chaque filet de la vis (21) comporte au moins une découpe (22) destinée à favoriser l'accroche mécanique du matériau entrant, et disposée de sorte qu'aucune découpe ne soit dans l'alignement axial d'une découpe disposée sur les filets adjacents.

7. Extrudeuse selon la revendication 5 ou la revendication 6, dans laquelle, dans la zone d'alimentation (A), la vis comprend au moins quatre filets.

8. Extrudeuse selon la revendication 5, dans laquelle, dans la zone de mise en pression (P), la vis comprend un filet unique.

9. Extrudeuse selon la revendication 8, dans laquelle, dans la zone de mise en pression (P), la vis a un pas compris entre 0,5 et 1,5 fois le diamètre (D) de la vis.

10. Extrudeuse selon la revendication 9, dans laquelle, dans la zone de mise en pression (P), le diamètre de l'arbre (20) de la vis (2) est inférieur au diamètre de l'arbre de la vis dans la zone située en amont ou en aval de ladite zone de mise en pression (P).

11. Extrudeuse selon la revendication 5, dans laquelle, dans la zone d'homogénéisation (H), la vis comprend au moins deux filets.

12. Extrudeuse selon la revendication 11, dans laquelle, dans la zone d'homogénéisation (H), la vis a un pas compris entre 1 et 1,5 fois le diamètre (D) de la vis.

13. Extrudeuse selon la revendication 11 ou la revendication 12, dans laquelle, dans la zone d'homogénéisation (H), les filets de la vis ou du fourreau sont interrompus de manière à former des espaces annulaires cylindriques (23).

14. Extrudeuse selon la revendication 13, dans laquelle, dans la zone d'homogénéisation (H), l'arbre de la vis ou le fourreau comportent des doigts (15) s'étendant radialement, et disposés de manière à circuler dans lesdits espaces annulaires cylindriques (23).

15. Extrudeuse selon la revendication 5, dans laquelle, dans la zone de stabilisation (S), la vis et le fourreau comportent chacun deux filets.

## Patentansprüche

1. Extruder zur Formung eines Stroms aus viskoelastischem Material wie Kautschuk, umfassend mehrere Zonen (A, P, H, S), die jeweils einer besonderen rheologischen Funktion zugeordnet sind und axial von einem stromaufwärtigen Ende aus bis zu einem stromabwärtigen Ende des Extruders angeordnet sind, und umfassend eine zylindrische Schnecke (2) mit gegebenem Durchmesser (D), die in jeder der Zonen mindestens einen wendelförmigen Steg (21) aufweist, der sich radial von einer zentralen Welle (20) der Schnecke aus über eine Höhe (h₁) gemäß einer für jede der Zonen definierten Richtung und Steigung erstreckt, und um eine Achse (XX') in einem Zylinder (1) drehangetrieben wird, **dadurch gekennzeichnet, dass** der Zylinder (1) mindestens einen wendelförmigen Steg (11) aufweist, der mindestens eine wendelförmige Bahn (12) definiert, durch den sich ein Teil des Materialstroms fortbewegen soll, und der jede der Zonen durchläuft, wobei er sich radial nach innen gemäß einer Höhe (h₂) des Stegs des Zylinders erstreckt, die zwischen dem 0,1- und 0,5-Fachen der Höhe (h₁) des Stegs der Schnecke beträgt, und wobei der Steg des Zylinders eine Wendel bildet, die in die entgegengesetzte Richtung zur Richtung der Wendel dreht, die durch den Steg der Schnecke gebildet wird.

2. Extruder nach Anspruch 1, **dadurch gekennzeichnet, dass** die Breite (a) der Nuten der wendelförmigen Bahn (12) größer ist als die Breite (b) des wendelförmigen Stegs (11) des Zylinders (1).

3. Extruder nach einem der Ansprüche 1 oder 2, **dadurch gekennzeichnet, dass** das Verhältnis zwischen der Breite (a) der Nuten der wendelförmigen Bahn und derjenigen (b) des wendelförmigen Stegs (11) des Zylinders (1) zwischen 3 und 10 beträgt.

4. Extruder nach einem der vorhergehenden Ansprüche, wobei in jeder der Zonen die Steigung des Stegs des Zylinders größer oder gleich der Steigung des Stegs der Schnecke ist.

5. Extruder nach einem der vorhergehenden Ansprüche, umfassend eine oder mehrere Zonen, die jeweils getrennt eine rheologische Funktion unter den folgenden Funktionen gewährleisten:
- eine Beschickungszone (A), die zum Einführen und Plastifizieren des Materials bestimmt ist,
- eine Druckbeaufschlagungszone (P), die zum Erhöhen von Temperatur und Druck des Materials bestimmt ist,
- eine Homogenisierungszone (H), die zum Homogenisieren der rheologischen Eigenschaften des Materials bestimmt ist,
- eine Stabilisierungszone (S), die zum Stabilisieren des Materialstroms vor dem Austreten durch eine Extrusionsdüse bestimmt ist.

6. Extruder nach Anspruch 5, wobei in der Beschickungszone (A) jeder Steg der Schnecke (21) mindestens einen Ausschnitt (22) aufweist, der dazu dient, die mechanische Haftung des eintretenden Materials zu begünstigen, und so angeordnet ist, dass kein Ausschnitt in der axialen Flucht eines Ausschnitts ist, der an den angrenzenden Stegen angeordnet ist.

7. Extruder nach Anspruch 5 oder Anspruch 6, wobei die Schnecke in der Beschickungszone (A) mindestens vier Stege umfasst.

8. Extruder nach Anspruch 5, wobei die Schnecke in der Druckbeaufschlagungszone (P) einen einzigen Steg umfasst.

9. Extruder nach Anspruch 8, wobei die Schnecke in der Druckbeaufschlagungszone (P) eine Steigung hat, die zwischen dem 0,5- und 1,5-Fachen des Durchmessers (D) der Schnecke beträgt.

10. Extruder nach Anspruch 9, wobei der Durchmesser der Welle (20) der Schnecke (2) in der Druckbeaufschlagungszone (P) kleiner ist als der Durchmesser der Welle der Schnecke in der stromauf oder stromab der Druckbeaufschlagungszone (P) gelegenen Zone.

11. Extruder nach Anspruch 5, wobei die Schnecke in der Homogenisierungszone (H) mindestens zwei Stege umfasst.

12. Extruder nach Anspruch 11, wobei die Schnecke in der Homogenisierungszone (H) eine Steigung hat, die zwischen dem 1- und 1,5-Fachen des Durchmessers (D) der Schnecke beträgt.

13. Extruder nach Anspruch 11 oder Anspruch 12, wobei die Stege der Schnecke oder des Zylinders in der Homogenisierungszone (H) unterbrochen sind, so dass sie zylindrische ringförmige Räume (23) bilden.

14. Extruder nach Anspruch 13, wobei die Welle der Schnecke oder der Zylinder in der Homogenisierungszone (H) Finger (15) aufweisen, die sich radial erstrecken und so angeordnet sind, dass sie in den zylindrischen ringförmigen Räumen (23) umlaufen.

15. Extruder nach Anspruch 5, wobei die Schnecke und der Zylinder in der Stabilisierungszone (S) jeweils zwei Stege aufweisen.

## Claims

1. Extruder intended for shaping a flow of viscoelastic material such as rubber, comprising several zones (A, P, H, S), each assigned to a particular rheological function and arranged axially from an upstream end to a downstream end of the extruder and comprising an endless cylindrical screw (2) of given diameter (D), comprising, in each of the zones, at least one helicoidal flight (21) extending radially from a central shaft (20) of the screw over a height (h₁), in a direction and with a pitch which are defined for each of the zones, and which is rotationally driven about an axis (XX') in a barrel (1), **characterised in that** the barrel (1) comprises at least one helicoidal flight (11) defining at least one helicoidal path (12) via which some of the flow of material is intended to progress, and travelling through each of the said zones extending radially inwards over a height (h₂) of the flight of the barrel which is comprised between 0.1 and 0.5 times the height (h₁) of the flight of the screw and in which extruder the flight of the barrel forms a helix rotating in the opposite direction to the direction of the helix formed by the flight of the screw.

2. Extruder according to Claim 1, **characterised in that** the width (a) of the grooves of the helicoidal path (12) is greater than the width (b) of the helicoidal flight (11) of the barrel (1).

3. Extruder according to either of Claims 1 and 2, **characterised in that** the ratio between the width (a) of the grooves of the helicoidal path and that (b) of the helicoidal flight (11) of the barrel (1) is comprised between 3 and 10.

4. Extruder according to one of the preceding claims, in which, in each of the zones, the pitch of the flight of the barrel is greater than or equal to the pitch of the flight of the screw.

5. Extruder according to one of the preceding claims, comprising one or more zones each separately performing one of the following rheological functions:
- a feed zone (A) devoted to the introduction and plasticising of the material,
- a compression zone (P), devoted to increasing the temperature and pressure of the material,
- a homogenisation zone (H), devoted to homogenising the rheological properties of the material,
- a stabilisation zone (S), devoted to stabilising the flow of material before it leaves through an extrusion die.

6. Extruder according to Claim 5, in which, in the feed zone (A), each flight of the screw (21) comprises at least one cutout (22) intended to encourage mechanical catching on the incoming material, and arranged in such a way that no cutout is axially aligned with a cutout located on the adjacent flights.

7. Extruder according to Claim 5 or Claim 6, in which, in the feed zone (A), the screw comprises at least four flights.

8. Extruder according to Claim 5, in which, in the compression zone (P), the screw comprises a single flight.

9. Extruder according to Claim 8, in which, in the compression zone (P), the screw has a pitch comprised between 0.5 and 1.5 times the diameter (D) of the screw.

10. Extruder according to Claim 9, in which, in the compression zone (P), the diameter of the shaft (20) of the screw (2) is less than the diameter of the shaft of the screw in the zone situated upstream or downstream of the said compression zone (P).

11. Extruder according to Claim 5, in which, in the homogenisation zone (H), the screw comprises at least two flights.

12. Extruder according to Claim 11, in which, in the homogenisation zone (H), the screw has a pitch comprised between 1 and 1.5 times the diameter (D) of the screw.

13. Extruder according to Claim 11 or Claim 12, in which, in the homogenisation zone (H), the flights of the screw or of the barrel are interrupted in such a way as to form cylindrical annular spaces (23).

14. Extruder according to Claim 13, in which, in the homogenisation zone (H), the shaft of the screw or the barrel comprises fingers (15) extending radially and arranged in such a way as to run in the said cylindrical annular spaces (23).

15. Extruder according to Claim 5, in which, in the stabilisation zone (S), the screw and the barrel each comprise two flights.
